# EUROPEAN PATENT SPECIFICATION

(11) **EP 4 124 771 B1**
(45) Date of publication and mention of the grant of the patent: **27.03.2024**
(21) Application number: 22187527.1
(22) Date of filing: 28.07.2022
(51) Int. Cl.: F16D 3/207

(54) **ARTICULATED JOINT FOR TRANSMITTING ROTATION BETWEEN TWO SHAFTS WITH PIVOT PINS EXTENDING RADIALLY INWARDLY FROM THE OUTER COUPLING PART**
GELENKKUPPLUNG ZUM ÜBERTRAGEN EINER DREHBEWEGUNG ZWISCHEN ZWEI WELLEN MIT VON DER ÄUSSEREN KUPPLUNGSHÄLFTE RADIAL NACH INNEN RAGENDEN GELENKZAPFEN
ACCOUPLEMENT ARTICULÉ POUR LA TRANSMISSION DES MOUVEMENTS DE ROTATION ENTRE DEUX ARBRES AVEC DES BROCHES DE PIVOTEMENT ORIENTÉES RADIALEMENT VERS L'INTÉRIEUR DE LA PIÈCE D'ACCOUPLEMENT EXTÉRIEUR

(30) Priority: 29.07.2021 IT 202100020348
(43) Date of publication of application: 01.02.2023
(73) Proprietor: Banfi, Giuseppe, 21050 Gorla Maggiore (Varese) (IT); Ferri, Stefano, 21050 Gorla Maggiore (Varese) (IT); Trombetti, Matteo, 37121 Verona (Verona) (IT)
(72) Inventor: BANFI, GIUSEPPE, 21050 GORLA MAGGIORE (VARESE) (IT)
(74) Representative: Forattini, Amelia

(56) References cited:
- WO-A2-02/063175
- CN-U- 202 091 389
- CN-Y- 2 413 083
- DE-C- 328 859
- FR-A1- 2 955 161
- FR-E- 28 511
- US-A- 243 914
- US-A- 1 418 380
- US-A- 2 487 485
- US-A- 2 653 456

## Description

The present invention relates to an articulated joint for the transmission of motion between two shafts.

Articulated joints allow mechanical connection, for motion transmission, between non-coaxial shafts.

In particular, articulated joints allow the transmission of motion between shafts with axes that are parallel but not coincident or with axes that are not parallel but are incident.

With an appropriate combination of articulated joints it is furthermore possible to transmit motion between shafts with axes that are neither parallel nor incident.

One type of articulated joints which is widely applied in all cases of demanding use, such as shafts of steam turbines, propeller supporting shafts, mills, etc., is the toothed joint, in which the hubs, supported by the two shafts, are provided with peripheral sets of teeth within which the corresponding internal sets of teeth of the housing that connects the two hubs engage.

The sets of teeth can be profiled like splined profiles, or can have a barrel-shaped profile so as to allow angles of 2-3° between the shafts.

Toothed joints have great load capacities but are affected by some drawbacks, which include the need for careful maintenance, especially as regards internal lubrication.

Another disadvantage of toothed joints is due to the relatively small angle that is possible between the two shafts.

DE328859C discloses a joint according to the prior art, namely a ball-and-socket joint coupling for ship turbine transmissions for shafts which are either not exactly aligned or which, in use, tend to change their mutual alignment. The joint provides a spherical coupling system.

FR2955161A1 discloses a universal spherical cardan joint for transmitting torque between axles. The joint has male elements with grooves sectioning trapeze, and sets of needle/roller type rolling elements arranged between cylindrical surfaces of coupling elements and external members.

US243914A discloses a universal shaft coupling provided with an annular groove to receive the heads of the gudgeons; the groove is flattened at opposite sides where the shaft passes through.

FR28511E, US1418380A, US2653456, US2487485A, CN2413083Y and CN202091389U disclose further conventional universal joints according to the prior art outlined above.

The problems and drawbacks of joints according to the prior art described above have been substantially overcome by an articulated joint as disclosed by WO02/063175, wherein radial interference members, arranged between the hub and the external body, are adapted to rotate and translate with respect to them, at the same time rendering them integral in rotation in order to allow motion transmission between two shafts, respectively associated one with the hub and the other with the external body, even when the respective rotation axes are not coaxial.

While the joint disclosed by WO02/063175 has proved extremely effective, the aim of the present invention is to provide an articulated joint that is further improved with respect to the joint and to the other joints of the cited prior art.

A particular object of the present invention is to provide an articulated joint, including a hub and a pair of annular external bodies, each of which can be coupled to the end of a respective shaft, which allows to use an adequate number of radial interference members, arranged between the hub and the external bodies, and an improved accommodation of the interference members.

A further object of the invention is to provide an articulated joint that allows to use larger radial interference members without increasing the external space occupations of the joint.

A further object of the invention is to provide a joint that is stronger and ensures a substantially longer life than traditional joints.

A further object of the invention is to provide a joint that allows to replace any worn parts, in a few minutes, without the need to disengage it from the shafts and without the need to disassemble supports or in any case parts of the apparatus.

A further object of the present invention is to provide a joint that has self-lubricating characteristics.

A further important object of the present invention is to provide a joint with modular characteristics allowing rapid and easy maintenance thereof and replacement of the components subject to wear.

A further object is to provide an articulated joint that can be produced with competitive production costs.

This aim and these and other objects which will become better apparent hereinafter are achieved by an articulated joint as claimed in the appended claims.

Further characteristics and advantages will become better apparent from the description of preferred but not exclusive embodiments of the invention, illustrated by way of non-limiting example in the accompanying drawings, wherein:
Fig. 1 is a sectional side view of the articulated body and of a rigid hub of the basic members of the joint, not according to the invention;
Fig. 2 is a transverse sectional view of the articulated body and of a rigid hub of the preceding figure;
Fig. 3 is a sectional side view of the joint;
Fig. 4 is a transverse sectional view of the joint of the preceding figure;
Fig. 5 is a sectional side view of the joint of the preceding figure, shown in a condition of angular non-alignment;
Fig. 6 is a sectional side view of a further joint, not according to the invention;
Fig. 7 is a transverse sectional view of the joint of the preceding figure;
Fig. 8 is a sectional side view of the joint of the preceding figure, shown in a condition of angular non-alignment;
Fig. 9 is a sectional side view of a joint, not according to the invention;
Fig. 10 is a sectional side view of the joint of the preceding figure, shown in a condition of axial non-alignment;
Fig. 11 is a sectional side view of the joint of the preceding figure, shown in a condition of angular non-alignment;

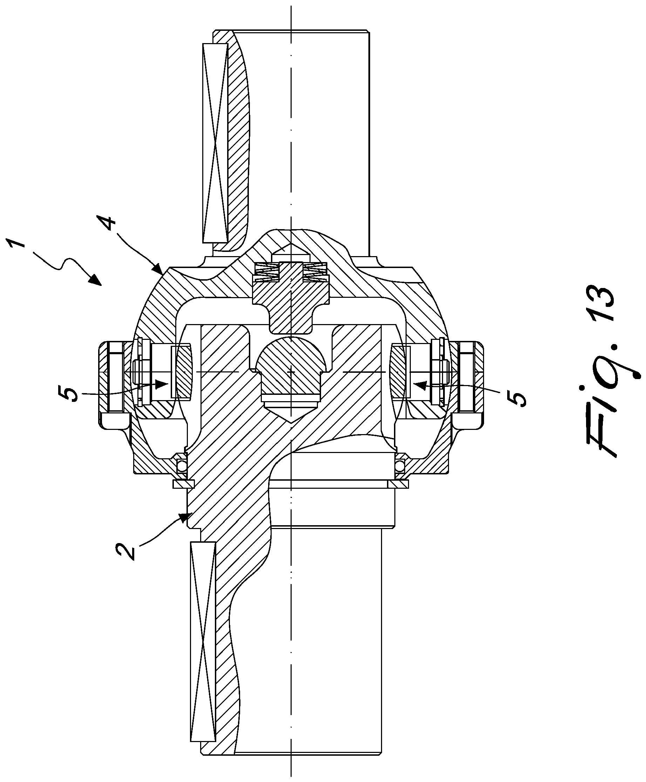

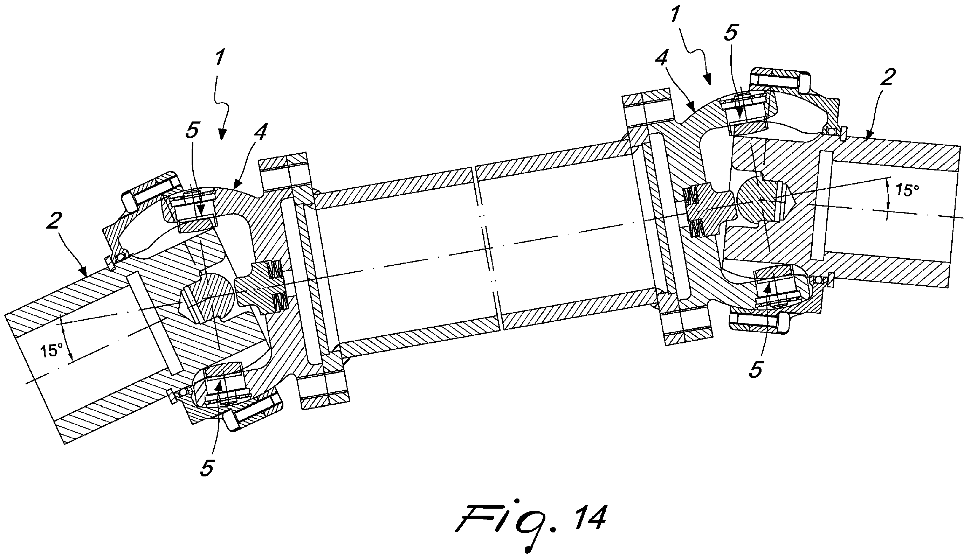

Figs. 12-14 are sectional side views of joints with extension terminals;
Fig. 15 is a sectional side view of a joint, not according to the invention;
Fig. 16 is a transverse sectional schematic view of the joint of the preceding figure;
Fig. 17 is a sectional view showing a detail of Fig. 15;
Figs. 18-20 schematically show the operating conditions of the joint;
Fig. 21 is a sectional side view of a joint according to the invention;
Fig. 22 is a sectional side view of a further embodiment of the joint according to the invention;
Fig. 23 is a sectional side view of an embodiment of the joint with extension terminals, not according to the present invention.

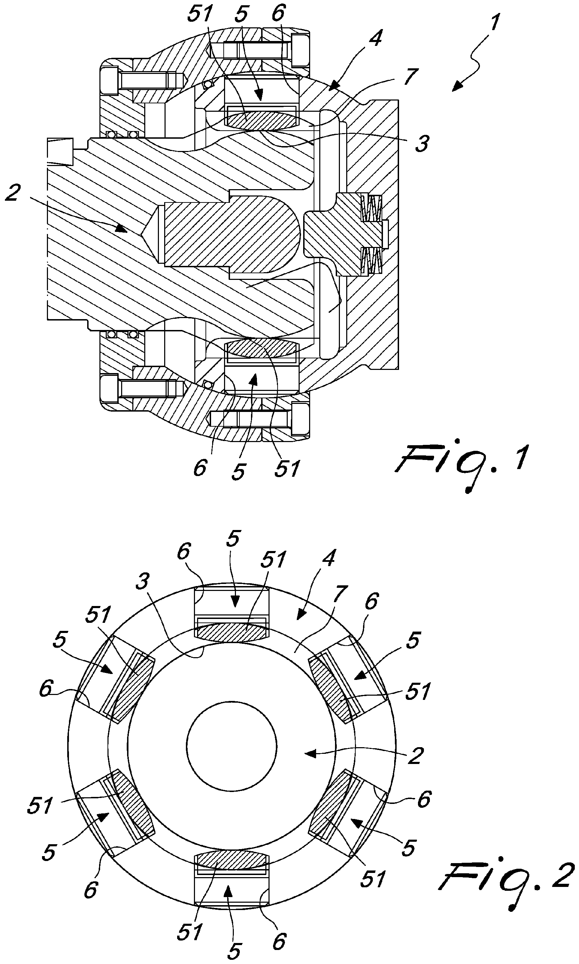

Figures 1 and 2 show a basic structure of an articulated joint, for the transmission of motion between two shafts, generally designated by the reference numeral 1, including a hub 2 which has a portion of a sphere 3.

The joint has a first external body 4 to be associated with a shaft.

The first external body 4 is substantially constituted by an annular body which is integral in rotation with the hub 2 by virtue of the presence of interference members 5, which are arranged radially.

Each interference member 5 can rotate in a radial seat 6 formed in the external body 4 and has an active end 51 which engages a groove 7 formed longitudinally in the hub 2.

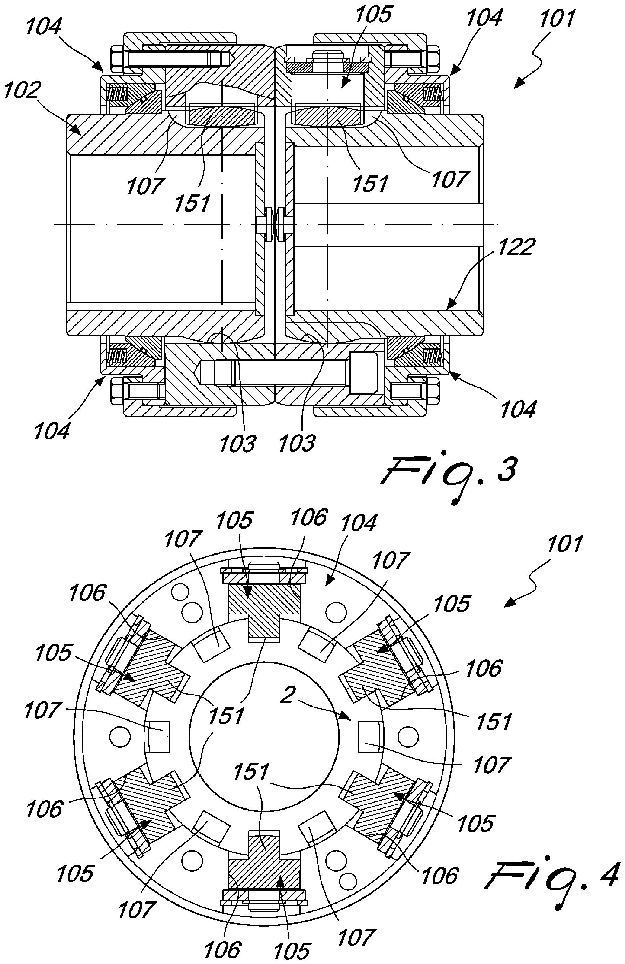

Figures 3-5 show an articulated joint, generally designated by the reference numeral 101, includes a first hub 102 and a second hub 122, each provided with a portion of a sphere 103 and each associable with a respective shaft, not visible in the figures.

The joint 101 has an external body 104 which is substantially constituted by an annular body which is integral in rotation with the hubs 102 and 122 by virtue of the presence of radially arranged interference members 105.

Each interference member 105 can rotate in respective radial seats 106, formed in the external body 104, and has an active end 151 which engages respective grooves 107 formed longitudinally in the hubs 102, 122.

Advantageously, the hub may be provided with a double series of grooves that double the lifespan of the hub.

The joint shown in Figures 3-5 has a dynamic angular error angle up to 2°30'.

The joint has a system for sealing the lubricant by means of male/female spherical parts with an O-ring.

The hubs are provided with a double groove in order to avoid their replacement in an unlikely case of wear.

The rotatable pivots are, if necessary, easily replaceable without removing the joint.

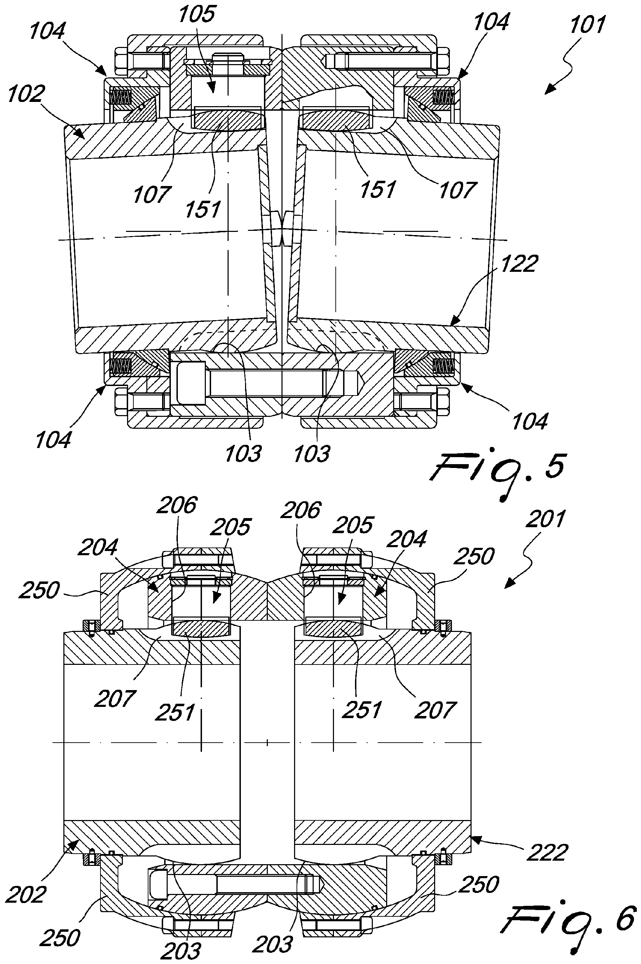

Figures 6-8 show an articulated joint, generally designated by the reference numeral 201, that includes a first hub 202 and a second hub 222, each provided with a portion of a sphere 203 and each associable with a respective shaft, not visible in the figures.

The joint 201 has an external body 204 which is substantially constituted by an annular body. The annular body rotates integrally with the hubs 202 and 222 by virtue of the presence of interference members 205 which are arranged radially.

Each interference member 205 rotates in respective radial seats 206. The radial seats 206 are formed in the external body 204. Each interference member 205 has an active end 251 which engages respective grooves 207 formed longitudinally in the hubs 202, 222.

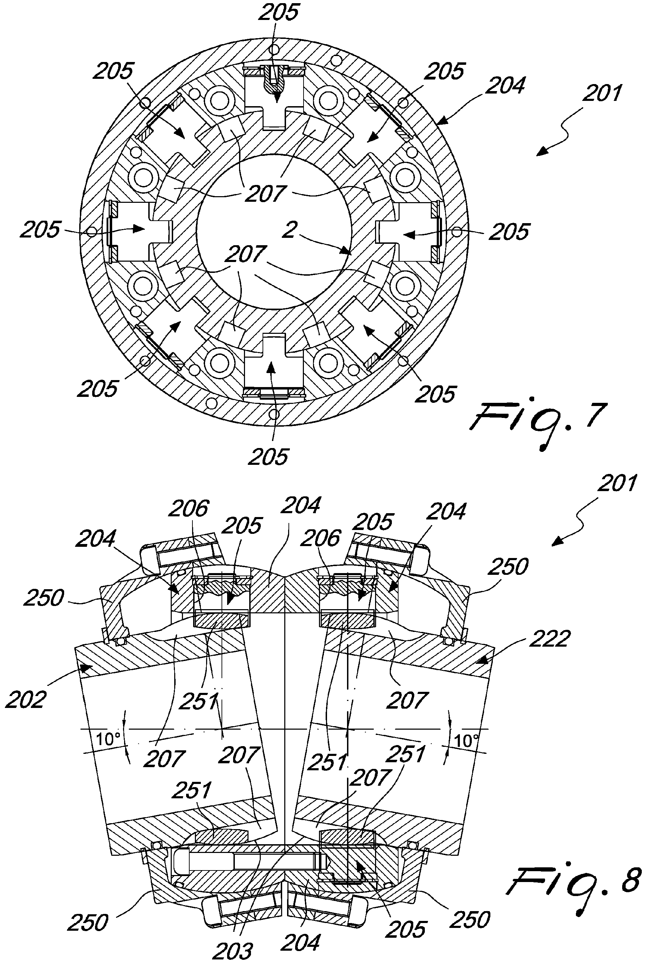

The joint 201 shown in Figures 6-8 offers a dynamic angular error of up to 10°, as shown schematically in Figure 8.

The joint 201 advantageously has flanges 250 for a lubricant seal by means of O-rings.

The joint 201 is provided with hubs with a double groove in order to avoid its replacement in case of wear.

If necessary, the rotatable pivots can be replaced easily and without removing the joint.

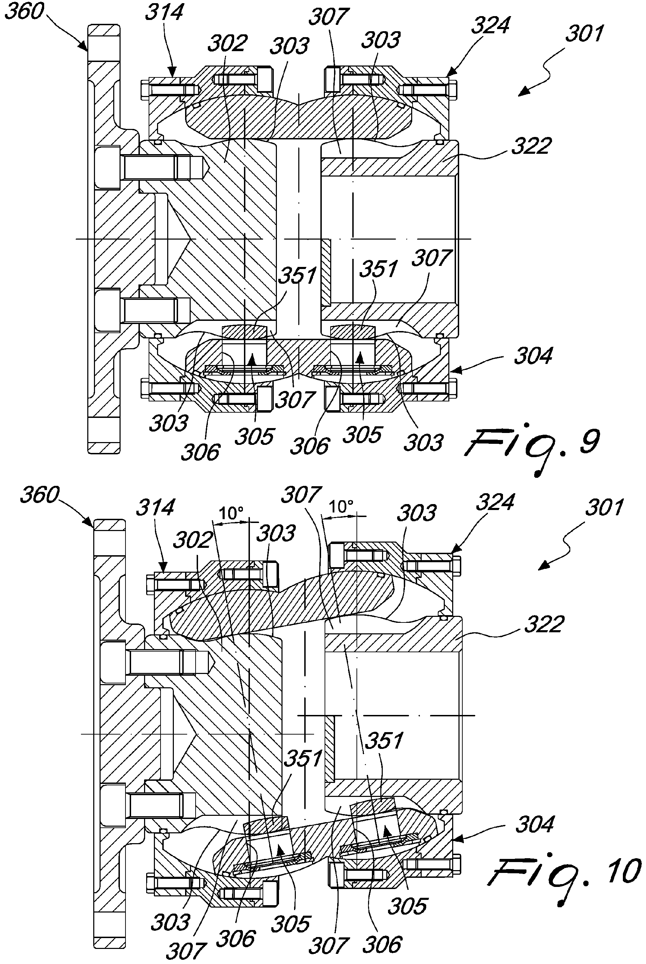

Figures 9-11 are views of an articulated joint, generally designated by the reference numeral 301, that includes a first hub 302 and a second hub 322, each provided with a portion of a sphere 303 and each to be associated with a respective shaft, not visible in the figures.

The joint has flanges, as exemplified in the figures, where a flange 360 associated with the hub 302 is visible.

The joint 301 has an external body which is constituted by a pair of annular bodies, designated by the reference numerals 314 and 324. The annular bodies rotate together with the hubs 302 and 322 by virtue of the presence of radially arranged interference members 305.

Each interference member 305 rotates in respective radial seats 306, formed in the external bodies 314, 324, and has an active end 351 which engages respective grooves 307 formed longitudinally in the hubs 302, 322.

Figure 9 is a view of the joint 301, provided with a flange 360, shown in a position without alignment errors, neither of the parallel axial type nor of the angular type, a condition which, in actual practice, is unlikely to be achievable. If it were possible to obtain this ideal condition, it would not be necessary to use a joint, which might work without time constraints, since no sliding motion between the entirely metallic parts would occur inside it.

In actual practice, the joint works in axial error conditions, as shown for example in Figure 10, which shows an extreme condition of axial error of 10°.

It should be noted that the contact region remains practically unchanged and might transmit the entire torque, so long as the rotation rate is tolerable with this condition.

The alignment errors generate in the joint a sliding, sliding friction, between the actuating part and the actuated part.

The greater the error, the greater the sliding, and the greater the wear and the overheating; all elements that have negative effects on the durability of the joint.

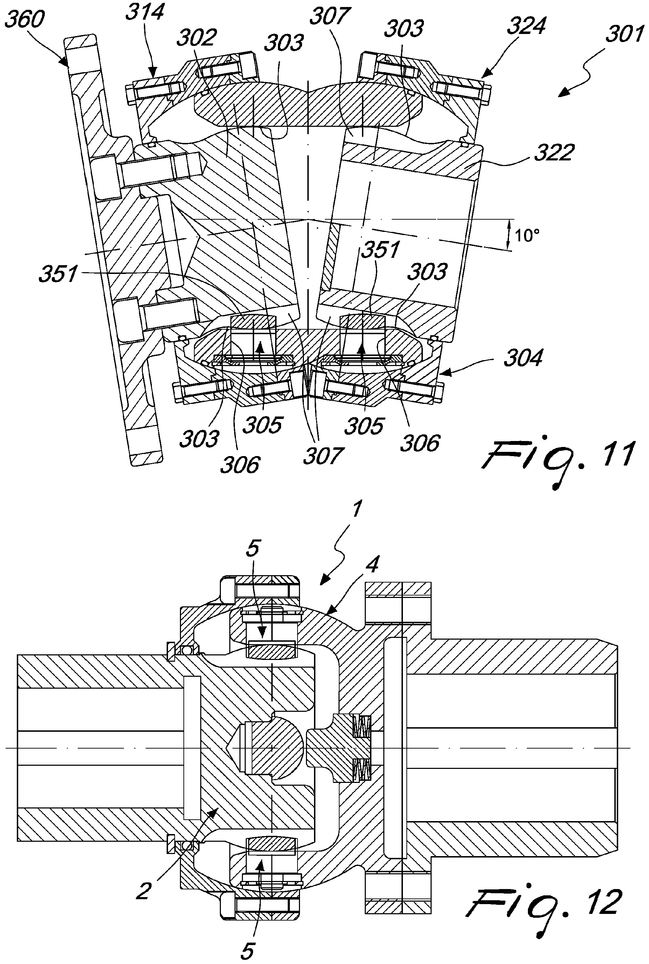

Figure 11 is a view of the joint 301 in a maximum angular error position, equal to 10°.

In this situation also, the only deterrent is the rotation rate, that is to be adapted to the value of the angular error.

It should be noted that in actual practice it is virtually impossible to provide assembly without errors, both of the axial parallel type and of the angular type, especially when considerably larger apparatuses are involved.

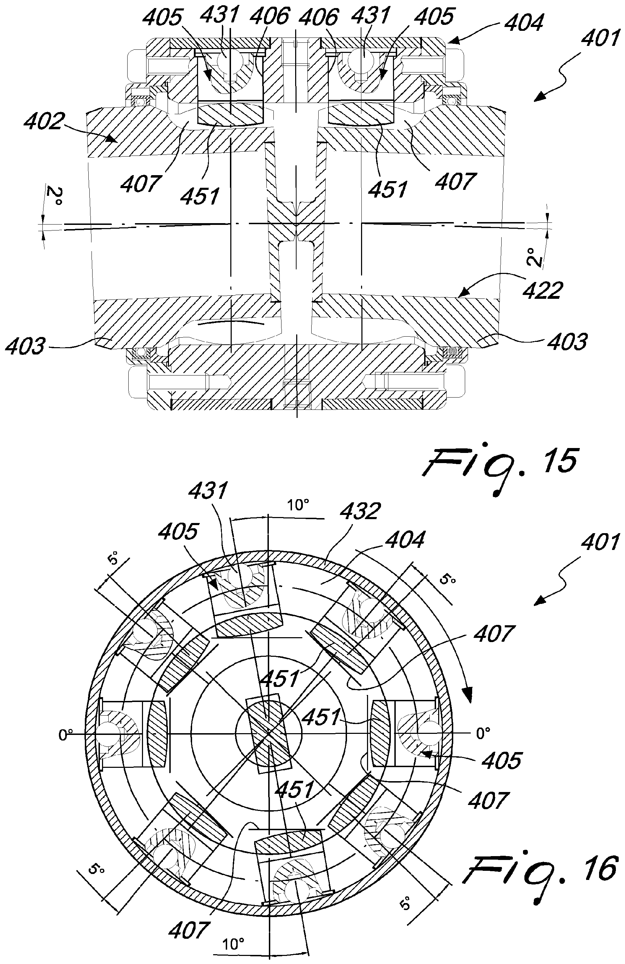

Figures 15-20 show an embodiment of the invention wherein the articulated joint, generally designated by the reference numeral 401, includes a first hub 402 and a second hub 422, each provided with a portion of a sphere 403 and each associable with a respective shaft, not visible in the figures.

The joint 401 has an external body 404 which is substantially constituted by an annular body which is integral in rotation with the hubs 402 and 422 by virtue of the presence of radially arranged interference members 405.

According to the present invention, each interference member 405 can rotate in respective radial seats 406, formed in the external body 404, and has an active end 451 which engages respective grooves 407 formed longitudinally in the hubs 402, 422.

Each interference member 405 has a seat 430 which accepts a sphere 431.

An outer ring 432 keeps the spheres 431 in their position within each seat 430.

Figure 16 is a functional view of the joint wherein the interference members (405) are shown rotated by 90° for the purpose of illustrating their operational features.

In Figure 16, the reference numeral 407 shows the bottom of the respective groove.

As schematically shown in figure 16, in all angular positions, with misalignment equal to 0° / 5° / 10°, the contact surface between each interference member 405 and the bottom of its respective groove 407 remains constant and complete, thereby, the transmissible torque remains practically unchanged.

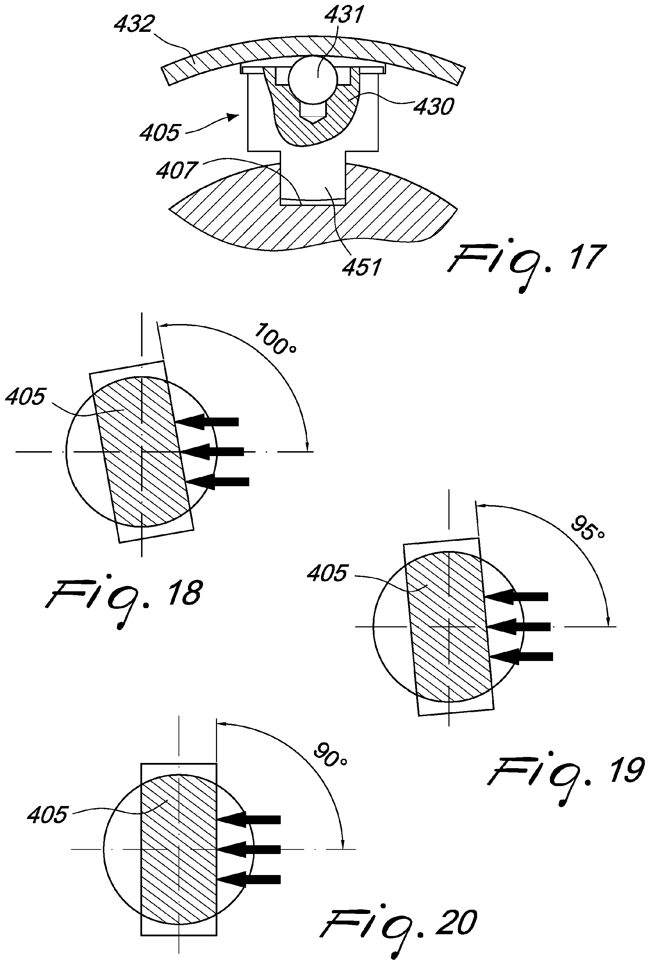

Figures 18-20 schematically show an example of rotation of the articulated joint connecting two shafts with a misalignment of 10 degrees.

The joint 401 has eight interference members 405.

For each rotation of the joint, all the interference members successively assume all the different positions. While the direction of the thrust is constant, the interference members freely assume a slight rotation due to the different position of the rotary moment.

The interference members, that rotate in their respective seats, are able to freely rotate in their housing.

Also, when the joint is still, the interference members 405 are not axially locked.

In fact, the interference members 405 have a minimum of play: during the rotation of the joint, by centrifugal force each interference member 405 pushes its respective spheres 431 against the outer ring 432. Thereby, all the interference members 405 will have an absolutely identical distance with respect to the rotation axis, ensuring a homogeneous and balanced rotation.

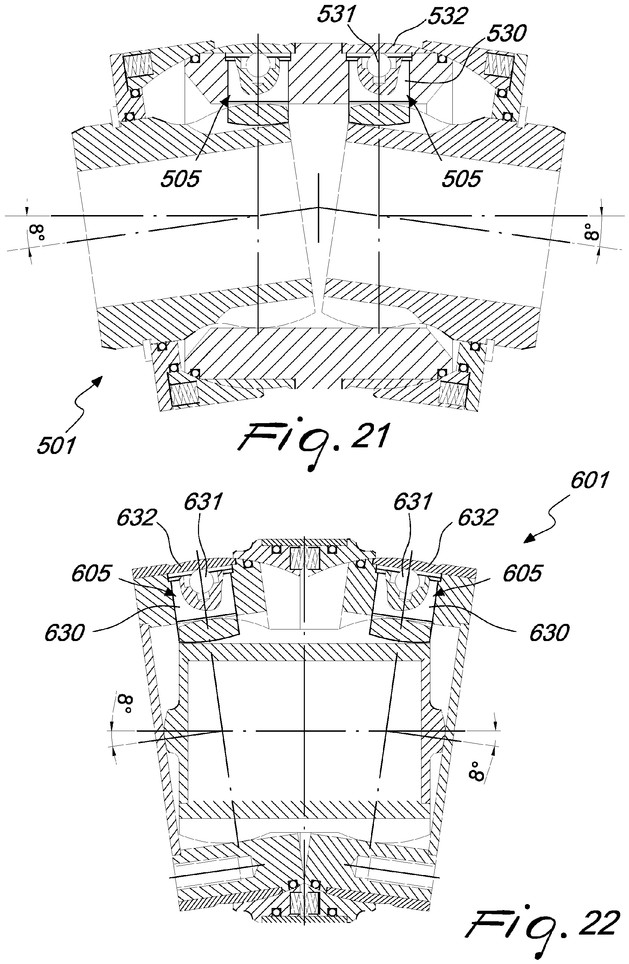

Figure 21 shows a further embodiment of the invention wherein the articulated joint, generally designated by the reference numeral 501 includes interference members 505 having seats 530 accepting respective spheres 531 kept in position by an outer member 532, in a manner similar to the articulated joint described above.

Figure 22 shows a further embodiment of the invention wherein the articulated joint, generally designated by the reference numeral 601 includes interference members 605 having seats 630 accepting respective spheres 631 kept in position by an outer member 632, in a manner similar to the articulated joints described above.

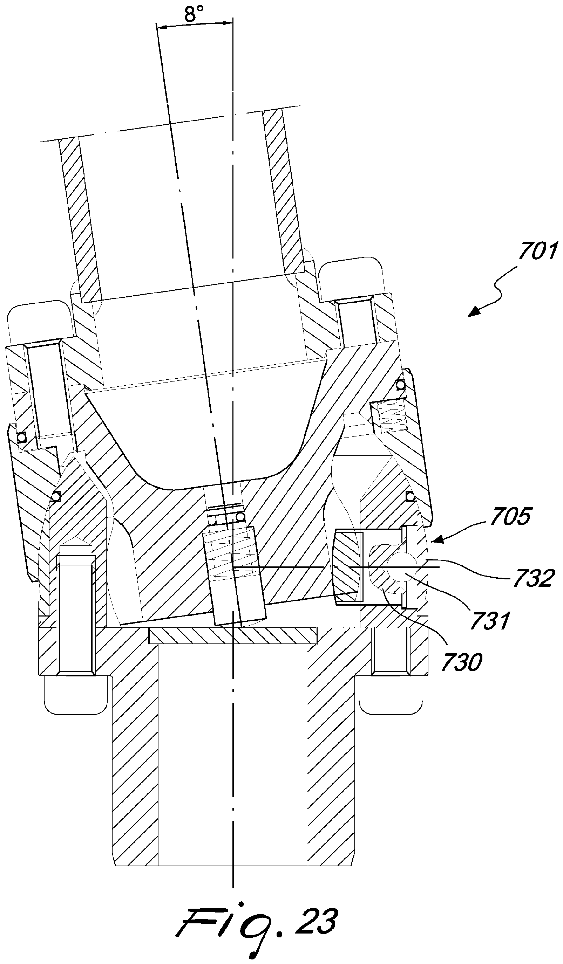

Figure 23 shows a joint, with extension terminals, wherein the articulated joint, generally designated by the reference numeral 701, includes interference members 705, of which only one is visible in figure 23.

The interference member 705 has a seat 730 accepting a sphere 731 kept in position by an outer member 732, in a manner similar to the articulated joints described above.

The articulated joint with the rotatable pivots accommodated in the ring, offers various constructive and functional advantages.

As evident by viewing the drawings in transverse cross-section figures 2, 4, 7 and 16, the structure of the joint allows to accommodate at least six rotatable pivots.

The rotatable pivots can be sized abundantly, in order to transmit high torques, without increasing the overall space occupation of the joint.

The hub is strengthened by the fact that it does not need to accommodate the body of the rotatable pivots but only the sliding end.

The hub is in fact better suited to accommodate the grooves in which contact with the rotatable pivot occurs.

Furthermore, the hub may have a double series of grooves which double the life of the hub.

The present invention offers the possibility to replace, in place and in a few minutes, any worn parts without the need to disengage the joint from the shafts that it connects and without disassembling supports or in any case parts of the apparatus.

In few minutes it is possible to replace easily all the rotatable pivots and therefore, by rotating the pivot supporting ring by one step, pass from the use of the old series of grooves to the series that had remained in the spare position.

In few minutes, the joint with rotatable pivots returns completely efficient, like new.

In practice it has been found that the invention achieves the intended aim and objects, an articulated joint having been provided which ensures various and considerable advantages with respect to traditional joints.

Normally, in toothed joints, it is indispensable to obtain an alignment with extremely small errors and for this reason assembly technicians are forced to long and demanding refinements, to the point of seeking aid by using even laser devices.

Furthermore, the durability and wear of the toothed joint are closely tied to the initial alignment errors but also to the subsequent ones due to the settling of the apparatus.

The joint with rotatable pivots according to the present invention can replace all traditional joints in a manner that is absolutely advantageous in terms of performance and durability.

The articulated joint according to the present invention can replace toothed joints of any type, universal joints of large sizes, laminated joints of any type, entirely metallic joints which are articulated or not and torsionally rigid.

The materials used, as well as the dimensions, may of course be any according to the requirements and the state of the art.

## Claims

1. An articulated joint for transmitting motion between two shafts, comprising a first hub (402), and a second hub (422), each having a portion of a sphere (403) and being associable with a respective shaft; an external body (404) associated with each said shaft; each said external body (404) being a substantially annular body which is integral in rotation with said respective hub (402, 422) by the action of interference members (405, 505, 605); each said interference member (405, 505, 605) being rotatable in a respective radial seat (406) formed in said external body (404); each said interference member (405, 505, 605) having an active end (451) which engages a respective groove (407) of a set of grooves (407) formed longitudinally in said hub (402, 422); said joint being **characterized in that** each said interference member (405, 505, 605) has a seat (430, 530, 630) which accepts a sphere (431, 531, 631); each said external body (404) having an outer ring (432, 532, 632); said outer ring (432, 532, 632) keeping each said sphere (431, 531, 631) at each said seat (430, 530, 630).

2. The articulated joint according to claim 1, **characterized in that** said hub (402, 422) comprises a number of grooves (407) which is twice the number of said interference members (405, 505, 605).

## Patentansprüche

1. Eine Gelenkkupplung zum Übertragen von Bewegung zwischen zwei Wellen, die Folgendes umfasst: eine erste Nabe (402) und eine zweite Nabe (422), welche jeweils einen Teil einer Kugel (403) haben und mit einer dazugehörigen Welle verbindbar sind; einen externen Körper (404), der mit jeder Welle verbunden ist; wobei jeder externe Körper (404) ein im Wesentlichen ringförmiger Körper ist, der durch die Wirkung von Eingriffsgliedern (405, 505, 605) integral in der Drehung mit der jeweiligen Nabe (402, 422) ist;
wobei jedes Eingriffsglied (405, 505, 605) in einem dazugehörigen radialen Sitz (406) drehbar ist, welcher in dem externen Körper (404) geformt ist; wobei jedes Eingriffsglied (405, 505, 605) ein aktives Ende (451) hat, das in eine entsprechende Nut (407) eines Satzes von Nuten (407) eingreift, die längs in der Nabe (402, 422) geformt sind; wobei die Kupplung **dadurch gekennzeichnet ist, dass** jedes Eingriffsglied (405, 505, 605) einen Sitz (430, 530, 630) hat, der eine Kugel (431, 531, 631) aufnimmt; wobei jeder externe Körper (404) einen äußeren Ring (432, 532, 632) hat; wobei der äußere Ring (432, 532, 632) jede Kugel (431, 531, 631) an jedem Sitz (430, 530, 630) hält.

2. Die Gelenkkupplung gemäß Anspruch 1, **dadurch gekennzeichnet, dass** die Nabe (402, 422) eine Anzahl von Nuten (407) umfasst, die das Doppelte der Anzahl der Eingriffsglieder (405, 505, 605) beträgt.

## Revendications

1. Accouplement articulé pour la transmission entre de mouvement entre deux arbres, comprenant un premier moyeu (402) et un deuxième moyeu (422) comportant respectivement une partie d'une sphère (403) et pouvant être associés à un arbre respectif; un corps externe (404) associé à chaque dit arbre; chaque dit corps externe (404) étant un corps substantiellement annulaire, lequel est intégré en rotation audit moyeu (402, 422) respectif par l'action d'éléments d'interférence (405, 505, 605);
chaque dit élément d'interférence (405, 505, 605) étant rotatif dans un siège radial (406) respectif formé dans ledit corps externe (404); chaque dit élément d'interférence (405, 505, 605) comportant une extrémité active (451) s'engageant dans une rainure (407) respective parmi un ensemble de rainures (407) formées longitudinalement dans ledit moyeu (402, 422); ledit accouplement étant **caractérisé en ce que** chaque dit élément d'interférence (405, 505, 605) comporte un siège (430, 530, 630) accueillant une sphère (431, 531, 631); chaque dit corps externe (404) comportant un anneau extérieur (432, 532, 632); ledit anneau extérieur (432, 532, 632) maintenant chaque dite sphère (431, 531, 631) au niveau de chaque dit siège (430, 530, 630).

2. Accouplement articulé selon la revendication 1, **caractérisé en ce que** ledit moyeu (402, 422) comprenant un certain nombre de rainures (407) égal au double du nombre desdits éléments d'interférence (405, 505, 605).
